# EUROPEAN PATENT APPLICATION

(11) **EP 3 872 566 A1**
(43) Date of publication of application: **01.09.2021**
(21) Application number: 19892707.1
(22) Date of filing: 20.05.2019
(51) Int. Cl.: G03B 17/12, G03B 15/03, H04M 1/02

(54) **PORTABLE MICRO IMAGING DEVICE**

(30) Priority: 05.12.2018 CN 201811482933
(71) Applicant: Convergence Technology Co. Ltd., Wuhan, Hubei 430074 (CN)
(72) Inventor: HU, Qinglei, Wuhan, Hubei 430074 (CN); HUANG, Kai, Wuhan, Hubei 430074 (CN); LI, Ning, Wuhan, Hubei 430074 (CN); LI, Mengting, Wuhan, Hubei 430074 (CN)
(74) Representative: Petculescu, Ana-Maria
(86) International application number: PCT/CN2019/087520
(87) International publication number: WO 2020/113909

(57) **Abstract**

The present invention discloses a portable micro imaging device, which is detachably connected with a portable imaging device (3) having a camera (31) and an illuminator (32), wherein the portable micro imaging device comprises a lens (1) and a lens body (2); the lens body (2) is made of a transparent or semi-transparent solid material, and has a uniform thickness in a length direction; an outer surface of a front surface (20b) of the lens body (2) is partially provided with an independent specular reflection layer or diffuse reflection layer to cover the illuminator (32), and the specular reflection layer or the diffuse reflection layer is made of an opaque material, and closed annular light-transmission ring is formed between the specular reflection layer or the diffuse reflection layer and an outer periphery of the front surface (20b) of the lens body (2); an opening size of a mounting hole (21) of the lens body (2) in the front surface (20b) of the lens body is larger than a size of the lens (1). Through the re-optimized design of the structure, the imaging device becomes small, light, convenient, easy to be used, and has high imaging quality and a large magnification.

## Description

### FIELD OF THE INVENTION

The present invention relates to the field of micro imaging, and in particular to a portable micro imaging device.

### BACKGROUND OF THE INVENTION

Microscopes can observe microstructures. A conventional microscope consists of an objective lens and an eyepiece, which are used to magnify and present the microstructure to the distance of distinct vision of human eyes. A digital microscopes uses area array photoelectric detectors instead of human eyes for detection, and can record images into digital image files, which facilitates signal acquisition.

A microscope usually has a large size, of which the most common form is a desktop microscope placed on a desktop. Miniaturized portable digital microscopes, and cell phone microscopes used with mobile phones solve the portability problem of microscopes, but certain limitations still exist, which is embodied in requirement for an external light source for illumination. When the illumination and the microscope body are combined, the battery also needs to be included, resulting in a larger overall structure. Although the applicant has proposed certain improvements in the prior patent CN108681188A, it has been found in actual use that: when the structures such as a reflection end for guiding light and a lens mounting hole are adopted, and the distance between the camera of the mobile phone and the illuminator is relatively small, a part of the illumination light guided to the mounting hole through the reflection end always inevitably illuminates directly into the lens with a high proportion, rather than being reflected into the lens via the microscopic object, resulting in uneven imaging and a imaging quality required for further improvement. In addition, the detachable mounting method of the lens body needs to be further improved for types with the lens protruding from the body of the mobile phone.

### SUMMARY OF THE INVENTION

In view of at least one of the above-mentioned defects or improvement requirements of the prior art, the present invention provides a portable micro imaging device. Through the re-optimized design of the structure, the imaging device becomes small, light, convenient, easy to be used, has a large magnification, and has strong adaptability for portable devices with different types. The imaging quality is further improved, and particularly suitable as an enhanced imaging module of mobile electronic imaging devices such as mobile phones.

In order to achieve the above object, according to one aspect of the present invention, a portable micro imaging device is provided. The portable micro imaging device is detachably connected with a portable imaging device having a camera and an illuminator, wherein the portable micro imaging device comprises a lens and a lens body, the lens is at least partially mounted in a mounting hole of the lens body, the lens includes an optical lens and a lens package. The lens is mounted directly opposite to the camera of the portable imaging device.

The lens body is made of a transparent or semi-transparent solid material, and has a uniform thickness in a length direction. An outer surface of a front surface of the lens body is partially provided with an independent specular reflection layer or diffuse reflection layer to cover the illuminator, the specular reflection layer or the diffuse reflection layer is made of an opaque material, and a closed annular light-transmission ring is formed between the specular reflection layer or the diffuse reflection layer and an outer periphery of the front surface of the lens body.

A back surface of the lens body is detachably connected with a mounting surface of the portable imaging device by pasting or adsorption, and is provided with an optional accessory mounting slot at an end away from the lens for detachably expanding and mounting an optional accessory.

An opening size of the mounting hole of the lens body in the front surface of the lens body is larger than a size of the lens.

Preferably, a text and/or a pattern identification is provided on an outer side of the specular reflection layer or the diffuse reflection layer on the front surface of the lens body.

Preferably, a pasting layer is provided on the back surface of the lens body, the outer side of the pasting layer is used for repetitively pasting connection with the mounting surface of the portable imaging device, and the pasting layer is provided with an opening corresponding to the mounting hole of the lens.

Preferably, the pasting layer has an annular shape surrounding the lens, an annular groove is correspondingly opened on the back surface of the lens body, a partial thickness of the pasting layer is embedded in the annular groove, and an inner side of the pasting layer is in pasting connection with the annular groove and/or in embedding connection with the annular groove, and the pasting layer does not cover a projection area of the illuminator of the portable imaging device on the back surface of the lens body.

Alternatively, the pasting layer has an elongated shape, the inner side of the pasting layer is connected with the back surface of the lens body, the pasting layer covers the projection area of the illuminator of the portable imaging device on the back surface of the lens body, and the pasting layer is made of a transparent or semi-transparent material.

Preferably, a suction cup is provided on the back surface of the lens body, the outer side of the suction cup is used for absorbing connection with the mounting surface of the portable imaging device, and an opening is provided in the suction cup corresponding to the mounting hole of the lens.

Preferably, the suction cup has an annular shape surrounding the lens, an annular groove is correspondingly opened on the back surface of the lens body, a partial thickness of the suction cup is embedded in the annular groove, and the inner side of the suction cup is connected with the annular groove, and the suction cup does not cover a projection area of the illuminator of the portable imaging device on the back surface of the lens body.

Alternatively, the suction cup has an elongated shape, the inner side of the suction cup is connected with the back surface of the lens body, the suction cup covers the projection area of the illuminator of the portable imaging device on the back surface of the lens body, and the suction cup is made of a transparent or semi-transparent material.

Preferably, the mounting hole of the lens body includes a cone hole, a smallest diameter of the cone hole is equal to a diameter of the lens, and a cone surface of the cone hole is a transparent surface or a semi-transparent surface.

Preferably, the mounting hole of the lens body includes a cylindrical counterbore, a diameter of the cylindrical counterbore is larger than that of the lens, and the surface of the cylindrical counterbore is a transparent surface or a semi-transparent surface.

Preferably, the optional accessory is a foot pad, the mounting groove is a foot-pad mounting groove, a partial thickness of the foot pad is embedded in the foot-pad mounting groove, and the inner side of the foot pad can be in repetitively pasting connection with the annular groove and/or embedding connection with the foot-pad mounting groove.

Preferably, the thickness t of the lens body is greater than or equal to 3.5 mm, while the distance between the front surface of the lens body and the objective end surface of the lens does not exceed a working distance w of the lens.

The above-mentioned preferred technical features can be combined with each other as long as they do not conflict with each other.

In generally, compared with the prior art, the above technical solutions conceived by the present invention have the following beneficial effects:
1. The portable micro imaging device of the present invention does not need to be provided with its own independent light source. By constructing the light guide cavity of the lens body, particularly the unique structure of the reflection layer on the front surface of the lens body and the mounting hole, the light source brought by the portable imaging device can form illuminating light near the lens through reflection, refraction and scattering without providing a reflection end for guiding light at the end, which not only meets the illuminating requirements, but also reduces the imaging device in the volume, so as to achieve portability, and meanwhile, avoid the illuminating light at the mounting hole to directly shot into the lens, causing an uniform image and a further improved image quality.
2. After the portable micro imaging device of the present invention is reduced in the volume, the focal length of the lens is smaller and the magnification ratio is larger, which can be used for macro imaging.
3. According to the portable micro imaging device of the present invention, through the closed annular light-transmission ring constructed between the reflection layer on the front surface of the lens body and the edge of the lens body, the illuminating light in the light guide cavity passes through the gap of the light-transmission ring during use, so that it will not lose a large amount of the illuminating light, and the light ring created by the illuminator makes the imaging device products bright, beautiful, vivid, and high-tech, which is extremely attractive to consumers and bystanders.
4. Compared with conventional clamping tools, in the portable micro imaging device of the present invention, the back surface of the lens body is detachably connected with the mounting surface of the portable imaging device by pasting or adsorption. Structure designs in various solutions of pasting layers or suction cups meet the adaptability requirements of the lens and illuminator with different models and specifications of portable imaging device to the distance and position, and improve the versatility and adaptability.
5. The portable micro imaging device of the present invention further provides an optional accessory mounting slot, which can expand and mount optional accessories. Particularly, when the camera of the portable imaging device protrudes from the surface of the portable imaging device, by mounting an optioned foot pad, the support can be provided between the lens body and the portable imaging device, which can make the lens body more stable after being mounted on the portable imaging device, and facilitate the use.
6. The portable micro imaging device of the present invention puts forward specific restrictions on the thickness of the lens body and the mounting position of the lens through repeated experiments, so that the effect of guiding light and imaging can be kept in the best state.

### BRIEF DESCRIPTION OF THE DRAWINGS

Fig. 1 is a schematic front view of a portable micro imaging device according to the present invention.
Fig. 2 is a schematic section view of the portable micro imaging device according to the present invention.
Fig. 3 is a schematic diagram of cooperatively using the portable micro imaging device according to the present invention and the portable imaging device.
Fig. 4 is a schematic diagram of an embodiment of a mounting hole of the portable micro imaging device according to the present invention.
Fig. 5 is a schematic diagram of another embodiment of a mounting hole of the portable micro imaging device according to the present invention.
Fig. 6 is a schematic diagram of geometrical parameters of the portable micro imaging device according to the present invention.
Fig. 7 is a schematic diagram of a connection mode of the portable micro imaging device according to the present invention and the portable imaging device.
Fig. 8 is a schematic diagram of another connection mode of the portable micro imaging device according to the present invention and the portable imaging device.
Fig. 9 is a schematic front view of an optional accessory of the portable micro imaging device according to the present invention.
Fig. 10 is a schematic side view of the optional accessory of the portable micro imaging device according to the present invention.

### DESCRIPTION OF THE PREFERRED EMBODIMENTS

In order to make the objects, technical solutions, and advantages of the present invention clearer, the present invention will be further described in detail with reference to the accompanying drawings and embodiments hereinafter. It should be understood that the specific embodiments described here are only used to describe the present invention, but not to limit the present invention. In addition, the technical features involved in the various embodiments of the present invention described hereinafter can be combined with each other as long as there is no conflict with each other. The present invention will be further described in detail hereinafter in conjunction with specific embodiments.

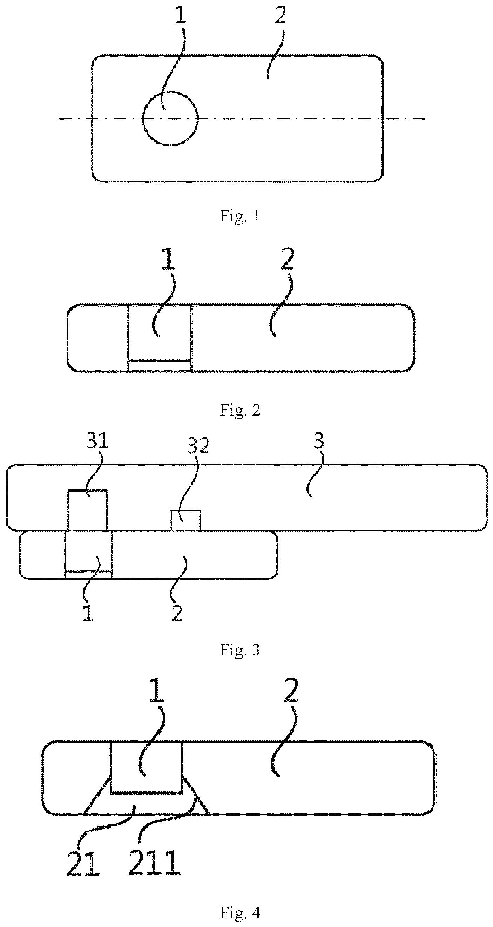

As shown in Figs. 1-3, a portable micro imaging device of the present invention is detachably connected with a portable imaging device 3 having a camera 31 and an illuminator 32. The portable imaging device 3 is, for example, a mobile phone and a tablet, etc., which includes a camera 31 and an illuminator 32, and the illuminator 32 is, for example, a flash, a fill light, etc.

The portable micro imaging device includes a lens 1 and a lens body 2. The lens 1 is at least partially mounted in a mounting hole 21 of the lens body 2. The lens 1 includes an optical lens and a lens package. The optical lens in the lens 1 consists of a spherical lens or an aspheric lens, and can be a single lens or a lens group including multiple lenses. Preferably, the lens 1 includes an aspheric lens, and is a lens group including multiple lenses. The lens package provides a mechanical package structure for the lens 1. As shown in Fig. 3, the lens 1 is mounted directly opposite to the camera 31 of the portable imaging device 3.

As shown in Figs. 1-3, the lens body 2 is made of a transparent or semi-transparent solid material, and has a uniform thickness in a length direction. The lens body 2 simultaneously functions as a mechanical structure and a light guide. The light guide function of the lens body 2 refers to guiding the light emitted by the illuminator 32 (such as a flash) on the portable imaging device 3 to an object to be imaged by the lens 1. An outer surface of a front surface 20b of the lens body 2 is partially provided with an independent specular reflection layer or diffuse reflection layer to cover the illuminator 32, and the specular reflection layer or the diffuse reflection layer is made of an opaque material, and a closed annular light-transmission ring is formed between the specular reflection layer or the diffuse reflection layer and an outer periphery of the front surface 20b of the lens body 2. A text and/or a pattern identification is provided on an outer side of the specular reflection layer or the diffuse reflection layer on the front surface 20b of the lens body 2. According to the portable micro imaging device of the present invention, through the closed annular light-transmission ring constructed between the reflection layer on the front surface of the lens body and the edge of the lens body, the illuminating light in the light guide cavity passes through the gap of the light-transmission ring during use, so that it will not lose a large amount of the illuminating light, and the light ring created by the illuminator makes the imaging device products bright, beautiful, vivid, and high-tech, which is extremely attractive to consumers and bystanders.

As shown in Figs. 4-5, an opening size of the mounting hole 21 of the lens body 2 in the front surface 20b of the lens body is larger than a size of the lens 1.

As shown in Fig. 4, the mounting hole 21 of the lens body 2 includes a cone hole 211, a smallest diameter of the cone hole 211 is equal to a diameter of the lens 1, and a cone surface of the cone hole 211 is a transparent surface or a semi-transparent surface.

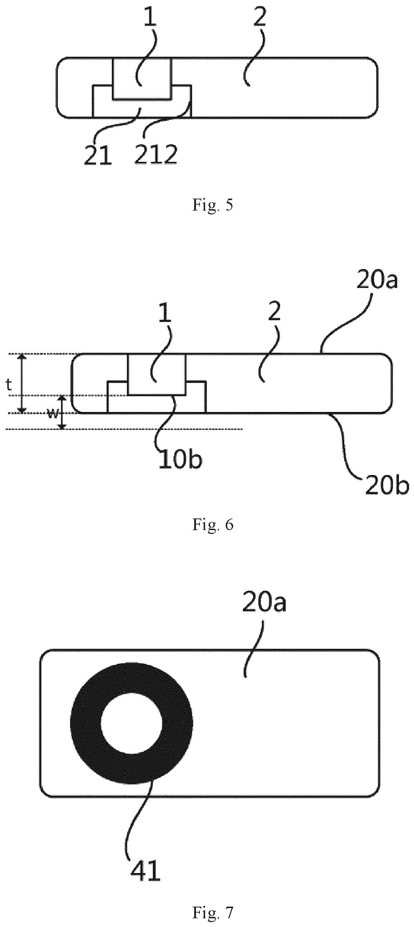

Alternatively, as shown in Fig. 5, the mounting hole 21 of the lens body 2 includes a cylindrical counterbore 212, a diameter of the cylindrical counterbore 212 is larger than that of the lens 1, and the surface of the cylindrical counterbore 212 is a transparent surface or a semi-transparent surface.

As shown in Fig. 6, in order to provide uniform and bright illumination, the thickness t (thickness in a normal direction of the front and back surfaces) of the lens body 2 is greater than or equal to 3.5 mm, while the distance between the front surface 20b of the lens body and the objective end surface 10b of the lens does not exceed a working distance w of the lens 1. The working distance of the lens refers to the distance between the area where the lens can clearly image when cooperatively working with the portable imaging device and the objective end surface 10b of the lens. The portable micro imaging device of the present invention puts forward specific restrictions on the thickness of the lens body and the mounting position of the lens through repeated experiments, so that the effect of guiding light and imaging can be kept in the best state.

As shown in Figs. 7-8, a back surface 20a of the lens body 2 is detachably connected with a mounting surface of the portable imaging device 3 by pasting or adsorption, and is provided with an optional accessory mounting slot at an end away from the lens 1 for detachably expanding and mounting an optional accessory.

As shown in Fig. 7, a pasting layer 41 is provided on the back surface 20a of the lens body 2, the outer side of the pasting layer 41 is used for repetitively pasting connection with the mounting surface of the portable imaging device 3, and the pasting layer 41 is provided with an opening corresponding to the mounting hole 21 of the lens 1.

As shown in Fig. 7, the pasting layer 41 has an annular shape surrounding the lens 1, an annular groove is correspondingly opened on the back surface 20a of the lens body 2, a partial thickness of the pasting layer 41 is embedded in the annular groove, and an inner side of the pasting layer 41 is in pasting connection with the annular groove and/or in embedding connection with the annular groove, and the pasting layer 41 does not cover a projection area of the illuminator 32 of the portable imaging device 3 on the back surface 20a of the lens body.

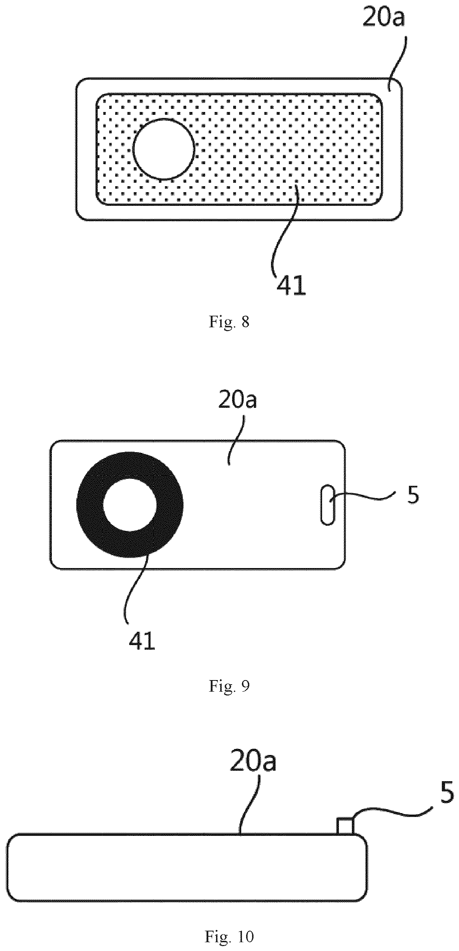

Alternatively, as shown in Fig. 8, the pasting layer 41 has an elongated shape, the inner side of the pasting layer 41 is connected with the back surface 20a of the lens body, the pasting layer 41 covers the projection area of the illuminator 32 of the portable imaging device 3 on the back surface 20a of the lens body, and the pasting layer 41 is made of a transparent or semi-transparent material.

A suction cup (not shown) is provided on the back surface 20a of the lens body 2, the outer side of the suction cup is used for absorbing connection with the mounting surface of the portable imaging device 3, and an opening is provided in the suction cup corresponding to the mounting hole 21 of the lens 1.

The suction cup has an annular shape surrounding the lens 1, an annular groove is correspondingly opened on the back surface 20a of the lens body 2, a partial thickness of the suction cup is embedded in the annular groove, and the inner side of the suction cup is connected with the annular groove, and the suction cup does not cover a projection area of the illuminator 32 of the portable imaging device 3 on the back surface 20a of the lens body.

Alternatively, the suction cup has an elongated shape, the inner side of the suction cup is connected with the back surface 20a of the lens body, the suction cup covers the projection area of the illuminator 32 of the portable imaging device 3 on the back surface 20a of the lens body, and the suction cup is made of a transparent or semi-transparent material.

The lens body can also be connected with the portable imaging device by clamping. The clamping tool used for clamping may be a clamp or a mobile phone case, of which the purpose is to be fixed with a portable imaging device. The clamping tool and the lens body may be in permanently fixing connection or detachable connection. When the clamping tool and the lens body are fixed in a detachable connection, the clamping tool and the lens body are fixed by means of snaps, threaded fittings, magnets, and the like.

Compared with conventional clamping tools, in the portable micro imaging device of the present invention, the back surface of the lens body is detachably connected with the mounting surface of the portable imaging device by pasting or adsorption. Structure designs in various solutions of pasting layers or suction cups meet the adaptability requirements of the lens and illuminator with different models and specifications of portable imaging device to the distance and position, and improve the versatility and adaptability.

As shown in Figs. 9-10, the optional accessory is a foot pad 5, the mounting groove is a foot-pad mounting groove, a partial thickness of the foot pad 5 is embedded in the foot-pad mounting groove, and the inner side of the foot pad 5 can be in repetitively pasting connection with the annular groove and/or embedding connection with the foot-pad mounting groove. Preferably, the foot pad is made of a soft elastic material similar to silica gel. The portable micro imaging device of the present invention further provides an optional accessory mounting slot, which can expand and mount optional accessories. Particularly, when the camera of the portable imaging device protrudes from the surface of the portable imaging device, by mounting an optioned foot pad, a support can be provided between the lens body and the portable imaging device. Because at this time the mounting surface is only in contact with the portable imaging device near the lens, while other positions on the mounting surface are suspended, using the foot pad can make the lens body more stable after being mounted on the portable imaging device, and facilitate the use.

According to a portable micro imaging device of the present invention, through the re-optimized design of the structure, the imaging device becomes small, light, convenient, easy to be used, has a large magnification, and has strong adaptability for portable devices with different types. The imaging quality is further improved, and particularly suitable as an enhanced imaging module for mobile electronic imaging devices such as mobile phones.

The portable micro imaging device of the present invention does not need to be provided with its own independent light source. By constructing the light guide cavity of the lens body, particularly the unique structure of the reflection layer on the front surface of the lens body and the mounting hole, the light source brought by the portable imaging device can form illuminating light near the lens through reflection, refraction and scattering without providing a reflection end for guiding light at the end, which not only meets the illuminating requirements, but also reduces the imaging device in the volume, so as to achieve portability, and meanwhile, avoid the illuminating light at the mounting hole to directly shot into the lens, causing an uniform image and a further improved image quality.

After the portable micro imaging device of the present invention is reduced in the volume, the focal length of the lens is smaller and the magnification ratio is larger, which can be used for macro imaging.

Those skilled in the art can easily understand that the above mention is only preferred embodiments of the present invention and are not intended to limit the present invention. Any modification, equivalent replacement and improvement, etc., made within the spirit and principle of the present invention all should be included in the claimed scope of the present invention.

## Claims

1. A portable micro imaging device, which is detachably connected with a portable imaging device (3) having a camera (31) and an illuminator (32), wherein the portable micro imaging device comprises a lens (1) and a lens body (2), the lens (1) is at least partially mounted in a mounting hole (21) of the lens body (2); the lens (1) includes an optical lens and a lens package; the lens (1) is mounted directly opposite to the camera (31) of the portable imaging device (3);
**characterized in that**: the lens body (2) is made of a transparent or semi-transparent solid material, and has a uniform thickness in a length direction; an outer surface of a front surface (20b) of the lens body (2) is partially provided with an independent specular reflection layer or diffuse reflection layer to cover the illuminator (32), and the specular reflection layer or the diffuse reflection layer is made of an opaque material, and a closed annular light-transmission ring is formed between the specular reflection layer or the diffuse reflection layer and an outer periphery of the front surface (20b) of the lens body (2);
a back surface (20a) of the lens body (2) is detachably connected with a mounting surface of the portable imaging device (3) by pasting or adsorption, and is provided with an optional accessory mounting slot at an end away from the lens (1) for detachably expanding and mounting an optional accessory;
an opening size of the mounting hole (21) of the lens body (2) in the front surface (20b) of the lens body is larger than a size of the lens (1).

2. The portable micro imaging device according to claim 1, **characterized in that**:
a text and/or a pattern identification is provided on an outer side of the specular reflection layer or the diffuse reflection layer on the front surface (20b) of the lens body (2).

3. The portable micro imaging device according to claim 1, **characterized in that**:
a pasting layer (41) is provided on the back surface (20a) of the lens body (2), the outer side of the pasting layer (41) is used for repetitively pasting connection with the mounting surface of the portable imaging device (3), and the pasting layer (41) is provided with an opening corresponding to the mounting hole (21) of the lens (1).

4. The portable micro imaging device according to claim 3, **characterized in that**:
the pasting layer (41) has an annular shape surrounding the lens (1), an annular groove is correspondingly opened on the back surface (20a) of the lens body (2), a partial thickness of the pasting layer (41) is embedded in the annular groove, and an inner side of the pasting layer (41) is in pasting connection with the annular groove and/or in embedding connection with the annular groove, and the pasting layer (41) does not cover a projection area of the illuminator (32) of the portable imaging device (3) on the back surface (20a) of the lens body;
alternatively, the pasting layer (41) has an elongated shape, the inner side of the pasting layer (41) is connected with the back surface (20a) of the lens body, the pasting layer (41) covers the projection area of the illuminator (32) of the portable imaging device (3) on the back surface (20a) of the lens body, and the pasting layer (41) is made of a transparent or semi-transparent material.

5. The portable micro imaging device according to claim 1, **characterized in that**:
a suction cup is provided on the back surface (20a) of the lens body (2), the outer side of the suction cup is used for absorbing connection with the mounting surface of the portable imaging device (3), and an opening is provided in the suction cup corresponding to the mounting hole (21) of the lens (1).

6. The portable micro imaging device according to claim 5, **characterized in that**:
the suction cup has an annular shape surrounding the lens (1), an annular groove is correspondingly opened on the back surface (20a) of the lens body (2), a partial thickness of the suction cup is embedded in the annular groove, and the inner side of the suction cup is connected with the annular groove, and the suction cup does not cover a projection area of the illuminator (32) of the portable imaging device (3) on the back surface (20a) of the lens body;
alternatively, the suction cup has an elongated shape, the inner side of the suction cup is connected with the back surface (20a) of the lens body, the suction cup covers the projection area of the illuminator (32) of the portable imaging device (3) on the back surface (20a) of the lens body, and the suction cup is made of a transparent or semi-transparent material.

7. The portable micro imaging device according to claim 1, **characterized in that**:
the mounting hole (21) of the lens body (2) includes a cone hole (211), a smallest diameter of the cone hole (211) is equal to a diameter of the lens (1), and a cone surface of the cone hole (211) is a transparent surface or a semi-transparent surface.

8. The portable micro imaging device according to claim 1, **characterized in that**:
the mounting hole (21) of the lens body (2) includes a cylindrical counterbore (212), a diameter of the cylindrical counterbore (212) is larger than that of the lens (1), and the surface of the cylindrical counterbore (212) is a transparent surface or a semi-transparent surface.

9. The portable micro imaging device according to claim 1, **characterized in that**:
the optional accessory is a foot pad (5), the mounting groove is a foot-pad mounting groove, a partial thickness of the foot pad (5) is embedded in the foot-pad mounting groove, and the inner side of the foot pad (5) can be in repetitively pasting connection with the annular groove and/or embedding connection with the foot-pad mounting groove.

10. The portable micro imaging device according to claim 1, **characterized in that**:
the thickness t of the lens body (2) is greater than or equal to 3.5 mm, while the distance between the front surface (20b) of the lens body and the objective end surface (10b) of the lens does not exceed a working distance w of the lens (1).
